# EUROPÄISCHE PATENTSCHRIFT

(11) **EP 2 583 263 B1**
(45) Veröffentlichungstag und Bekanntmachung des Hinweises auf die Patenterteilung: **19.03.2014**
(21) Anmeldenummer: 11724523.3
(22) Anmeldetag: 19.03.2011
(51) Int. Cl.: G08G 1/16, G08G 1/0967

(54) **VERFAHREN ZUR FUSION EINES VERKEHRSZEICHENERKENNUNGSSYSTEMS UND EINES SPURERKENNUNGSSYSTEMS EINES KRAFTFAHRZEUGS**
METHOD FOR COMBINING A ROAD SIGN RECOGNITION SYSTEM AND A LANE DETECTION SYSTEM OF A MOTOR VEHICLE
PROCÉDÉ POUR FUSIONNER UN SYSTÈME DE RECONNAISSANCE D'UN PANNEAU DE SIGNALISATION ET UN SYSTÈME DE RECONNAISSANCE DE VOIE D'UN VÉHICULE AUTOMOBILE

(30) Priorität: 15.06.2010 DE 102010023791
(43) Veröffentlichungstag der Anmeldung: 24.04.2013
(73) Patentinhaber: Conti Temic Microelectronic GmbH, 90411 Nürnberg (DE)
(72) Erfinder: MEIS, Urban, 88131 Lindau (DE); GUTMANN, Christian, 60389 Frankfurt (DE); SCHORN, Matthias, 64367 Mühltal (DE); KRISTENSEN, Steen, 88161 Lindenberg im Allgäu (DE)
(86) Internationale Anmeldenummer: PCT/DE2011/000295
(87) Internationale Veröffentlichungsnummer: WO 2011/157251

(56) Entgegenhaltungen:
- EP-A2- 2 093 738
- WO-A1-2005/090918
- DE-A1-102006 023 544

## Beschreibung

Die Erfindung betrifft ein Verfahren zur Fusion eines Verkehrszeichenerkennungssystems und eines Spurerkennungssystems eines Kraftfahrzeugs gemäß Oberbegriff des Patentanspruchs 1.

Moderne Fahrerassistenzsysteme unterstützen den Fahrer bei seiner Aufgabe der Fahrzeugführung. Grundlage vieler solcher Systeme sind bspw. die Spurerkennung und die Verkehrszeichenerkennung. Mit einer robusten und zuverlässigen Spurerkennung lässt sich eine Spurverlassenswarnung, eine Spurzuordnung für Längsregelsysteme oder eine Eingriffsfunktion in die Lenkung zwecks Spurhaltung realisieren.

In der Regel basieren solche Spurerkennungssysteme und Verkehrszeichenerkennungssysteme auf Kamerasystemen, insbesondere auf Videokamerasystemen, die entweder am Innenspiegel oder an Außenspiegeln des Kraftfahrzeugs angebracht sind.

Es ist bekannt, dass solche Fahrerassistenzsysteme zusätzliche Informationen aus einem Navigationssystem und/oder verschiedenen Fahrerassistenzsystemen erhalten, um Fehler in der Zuordnung oder Mehrdeutigkeiten zu reduzieren.

So beschreibt die DE 10 2009 036 196 A1 ein Verfahren zur Verkehrszeichenerkennung für ein Fahrzeug, bei welchem Verkehrszeichen in einer Umgebung des Fahrzeugs mittels einer Kamera gesucht und erfasst werden. Zur Suche der Verkehrszeichen in der Umgebung des Fahrzeugs werden Kartendaten eines Navigationssystems verwendet sowie anhand von Spurdaten eines Spurerkennungssystems und/oder anhand einer mittels einer Sensorvorrichtung geschätzten jeweiligen Relativlage der Verkehrszeichen zur Kamera Suchbereiche zur Suche der Verkehrszeichen in der Umgebung vorgewählt und/oder begrenzt.

Weiterhin ist aus der DE 199 48 734 A1 ein Verfahren bekannt, bei dem mittels einer Kamera eine Spurerkennung durchgeführt wird, wobei diese Daten einem Auswerterechner zugeführt werden, mit welchem Navigationsdaten und aktuelle Spurerkennungsdaten ortsbezogen korrelierbar sind. Damit können die elektronisch kartographierten und/oder prädiktiv bekannten Streckendaten während des Fahrbetriebs durch eine permanente Spurprüfung verifiziert werden. Ferner werden die Bilddaten der Kamera auch einer Verkehrszeichenerkennung zugeführt, so dass die aktuellen Ergebnisdaten der Spurprüfung sowie die Streckendaten mit den aktuellen Daten einer kameragestützten elektronischen Verkehrszeichenerkennung korreliert werden.

Des Weiteren ist aus der WO 2005/090918 A1 ein Verfahren sowie eine Vorrichtung zur Durchführung dieses Verfahrens zur Präzisierung der Fahranweisungen eines Navigationssystems bekannt, bei dem Daten der Fahrumgebung eines Fahrzeugs in das Navigationssystem eingespeist werden, wobei diese Umgebungsdaten mittels eines Kamerasystems gewonnen werden. Die präzisierten Fahranweisungen basieren auf erkannten Objekten/Markierungen der Fahrumgebung, wie bspw. eines erkannten Typs der Markierung einer Fahrspur, einen erkannten Spurtyp, erkannte Verkehrsschilder und Ampeln sowie erkannten Gegen- und Querverkehr.

Solche Objekte/Markierungen werden aus den von dem Kamerasystem erfassten Umgebungsdaten detektiert und dem Navigationssystem des Fahrzeugs zugeführt, so dass hieraus von dem Navigationssystem präzisierte Fahranweisungen an den Fahrer erzeugt werden können. Ortsfeste Objekte/Markierungen, wie Zebrastreifen, Pfeile, Haltelinien, Kreuzungen, Straßen, Ampeln und dergleichen werden zum exakten Abgleich der Fahrumgebung des Fahrzeugs mit den hinterlegten Kartendaten des Navigationssystems verwendet. In dieser Weise werden auch nichtstationäre Objekte, wie bspw. andere Verkehrsteilnehmer erfasst und für einen Abgleich mit den Kartendaten des Navigationssystems eingesetzt. Damit sollen nicht nur Fahranweisungen im Wesentlichen auf Basis des von dem Kamerasystemen erkannten Typs der Markierung der Fahrspur sowie erkannten Abbiegepfeilen, Haltelinien, Zebrastreifen präzisiert werden, sondern auch auf Basis von erkannten Verkehrsschildern, Ampeln sowie Gegen- und Querverkehr.

Der Vollständigkeit halber wird auch auf die DE 10 2006 023 544 A1 sowie die EP 2 093 738 A2 hingewiesen.

Die DE 10 2006 023 544 A1 beschreibt ein Verfahren zum Betrieb eines Fahrzeugs, bei welchem mittels einer Kamera die Fahrumgebung bezüglich Verkehrszeichen und anderer Merkmale analysiert und den erkannten Merkmalen je nach ihrer Häufigkeit und Konstellation eine wahrscheinlichste Umgebungsklasse zugeordnet wird. Um den Fahrkomfort und die Fahrsicherheit zu erhöhen, wird bei der jeweils vorliegenden Umgebungsklasse eine bestimmte optimierte Betriebsart von Unterstützungsfunktionen für den Fahrer eingestellt.

Die EP 2 093 738 A2 offenbart ein Verfahren, bei welchem einer Steuer- und Auswerteeinheit Routen-Informationen zum aktuellen oder geplanten Fahrweg eines Fahrzeugs zugeführt werden und an dem aktuellen oder geplanten Fahrweg des Fahrzeugs angepasste Informationen angezeigt werden, sobald für verschiedene Fahrwegmöglichkeiten verschiedene Verkehrszeichen und/oder verschiedene Verkehrseinrichtungen erfasst werden. Dabei hängen die angezeigten Informationen von der Route des Fahrzeugs ab, so dass die Anzeige von Informationen zu Verkehrszeichen oder Verkehrseinrichtungen reduziert oder verhindert werden können, die für die aktuelle bzw. geplante Fahrtroute nicht relevant sind.

Die Funktionalität solcher Fahrerassistenzsysteme kann jedoch eingeschränkt sein, wenn die navigationsbasierten Daten nicht zur Verfügung stehen, also diesen Systemen die zusätzlichen Eingangssignale eines satellitengestützen Navigationssystems nicht zur Verfügung stehen.

Aufgabe der Erfindung ist es, ein Verfahren der eingangs genannten Art derart weiterzuentwickeln, dass sowohl das Verkehrszeichenerkennungssystem als auch das Spurerkennungssystem robuster und zuverlässiger und deren Verfügbarkeit verbessert wird, ohne dass Informationen aus einer digitalen Karte oder eines satellitengestützten Navigationssystem erforderlich sind.

Diese Aufgabe wird gelöst durch ein Verfahren mit den Merkmalen des Patentanspruchs 1.

Dieses erfindungsgemäße Verfahren zeichnet sich dadurch aus, dass aus den Fahrspurverlaufsinformationen des Spurerkennungssystems bedeutungsanzeigende Daten für Verkehrszeichen erzeugt werden, diese für Verkehrszeichen bedeutungsanzeigende Daten zur Plausibilisierung und/oder Interpretation der Verkehrszeicheninformationen verwendet werden, ferner aus den Verkehrszeicheninformationen des Verkehrszeichenerkennungssystems fahrspurverlaufsanzeigende Daten erzeugt werden, und diese fahrspurverlaufsanzeigende Daten zur Plausibilisierung und/oder Interpretation der Fahrspurverlaufsinformationen verwendet werden.

Damit werden aus der Spurerkennung Informationen gewonnen, die auch für die Gültigkeit von Verkehrszeichen relevant sind, also zur Bedeutungsanalyse bzw. zur Deutungsfindung verwendet werden. Umgekehrt werden in gleicher Weise auch die Informationen über erkannte Verkehrszeichen für die Spurerkennung verwendet.

Gemäß einer Ausgestaltung der Erfindung ist es vorgesehen, dass ein mittels des Verkehrszeichenerkennungssystems erkanntes Verkehrszeichen mit fahrspurverlaufsanzeigenden Daten plausibilisiert bzw. interpretiert wird, um damit sicherzustellen, dass ein erkanntes Verkehrszeichen für die gerade befahrene Fahrspur relevant ist, d. h. für den Fahrzeugführer gilt und daher von ihm beachtet werden muss.

Vorzugsweise werden hierzu aus den Fahrspurverlaufsinformationen als für Verkehrszeichen bedeutungsanzeigende Daten Informationen über die Linienstruktur zur Überholspur einer Fahrbahn erzeugt und von dem Verkehrszeichenerkennungssystem erkannte überholverbotsanzeigende Verkehrszeichen mit diesen Informationen über die Linienstruktur plausibilisiert.

Gemäß einer weiteren vorteilhaften Ausgestaltung der Erfindung werden aus den Fahrspurverlaufsinformationen als für Verkehrszeichen bedeutungsanzeigende Daten eine Ausfahrt oder einen Ausfahrtsbereich anzeigende Informationen erzeugt und von dem Verkehrszeichenerkennungssystem erkannte geschwindigkeitsbeschränkende und/oder überholverbotsanzeigende Verkehrszeichen mit den diese Ausfahrt oder diesen Ausfahrtsbereich anzeigenden Informationen plausibilisiert.

Wenn damit einerseits gemäß einer Ausgestaltung der Erfindung aus der mittels des Spurerkennungssystems erkannten aktuellen Fahrspur und/oder aus einem mittels des Spurerkennungssystems erkannten Fahrspurwechsel des Kraftfahrzeugs und den eine Ausfahrt anzeigenden Informationen eine Vorbeifahrt des Kraftfahrzeugs an der Ausfahrt detektiert wird, werden die Daten von dem Verkehrszeichenerkennungssystem verworfen, welche die erkannte und die Ausfahrt betreffenden geschwindigkeitsbeschränkende und/oder überholverbotsanzeigende Verkehrszeichen betreffen.

Wenn jedoch andererseits gemäß einer weiteren Ausgestaltung der Erfindung aus der mittels des Spurerkennungssystems erkannten aktuellen Fahrspur und/oder aus einem mittels des Spurerkennungssystems erkannten Fahrspurwechsel des Kraftfahrzeugs und den eine Ausfahrt anzeigenden Informationen eine Abfahrt des Kraftfahrzeugs detektiert wird, werden von dem Verkehrszeichenerkennungssystem erkannte und der Ausfahrt zugeordnete geschwindigkeitsbeschränkende und/oder überholverbotsanzeigende Verkehrszeichen an eine HMI-Schnittstelle des Kraftfahrzeugs ausgegeben.

In einer weiteren vorteilhaften Ausgestaltung des erfindungsgemäßen Verfahrens werden aus den die aktuelle Fahrspur des Kraftfahrzeugs betreffenden Fahrspurverlaufsinformationen als für Verkehrszeichen bedeutungsanzeigende Daten eine Ausfahrt oder einen Ausfahrtsbereich anzeigende Informationen erzeugt und mit diesen eine Ausfahrt oder einen Ausfahrtsbereich anzeigende Informationen von dem Verkehrszeichenerkennungssystem erkannte geschwindigkeitsbeschränkende und/oder überholverbotsanzeigende Verkehrszeichen als aufgehoben interpretiert.

Ferner ist es weiterbildungsgemäß vorgesehen, dass aus den die aktuelle Fahrspur betreffenden Fahrspurverlaufsinformationen als für Verkehrszeichen bedeutungsanzeigende Daten eine Ausfahrt oder einen Ausfahrtsbereich anzeigende Informationen erzeugt und aus der Häufigkeit der erkannten Ausfahrten oder Ausfahrtsbereichen einen Rechtsverkehr oder einen Linksverkehr anzeigende Verkehrszeichen plausibilisiert werden.

Schließlich ist es gemäß einer Ausgestaltung der Erfindung weiterhin vorteilhaft, wenn aus den die aktuelle Fahrspur betreffenden Fahrspurverlaufsinformationen als für Verkehrszeichen bedeutungsanzeigende Daten Baustellen anzeigende Informationen erzeugt und mit den eine Baustelle anzeigende Informationen von dem Verkehrszeichenerkennungssystem erkannte geschwindigkeitsbeschränkende und/oder überholverbotsanzeigende Verkehrszeichen plausibilisiert werden.

Die Unterstützung des Spurerkennungssystems durch das Verkehrszeichenerkennungssystem erfolgt in einer vorteilhaften Ausgestaltung der Erfindung dadurch, dass aus den von dem Verkehrszeichenerkennungssystem erzeugten Verkehrszeicheninformationen als fahrspurverlaufsanzeigende Daten Baustellen anzeigende Informationen erzeugt werden, und aus den Baustellen anzeigende Informationen mittels des Spurerkennungssystems die Sensordaten nach bestimmten Spurverlaufsszenarien und/oder Indikatoren für bestimmte Spurverlaufsszenarien ausgewertet werden. So können die Informationen über von dem Verkehrszeichenerkennungssystem erkannten Baustellenschilder dazu verwendet werden, dass das Spurerkennungssystem die Bildinformationen als Indikatoren für bestimmte Spurverlaufsszenarien hinsichtlich bestimmten Fahrbahnmarkierungen, insbesondere nach gelben Fahrbahnmarkierungen auswertet.

In einer weiteren vorteilhaften Ausgestaltung des erfindungsgemäßen Verfahrens ist es vorgesehen, dass aus den von dem Verkehrszeichenerkennungssystem erzeugten Verkehrszeicheninformationen als fahrspurverlaufsanzeigende Daten geschwindigkeitsbeschränkende und/oder den Straßentyp bezeichnende Verkehrszeichen anzeigende Informationen erzeugt und die Informationen, welche geschwindigkeitsbeschränkende und/oder den Straßentyp bezeichnende Verkehrszeichen anzeigen, mittels des Spurerkennungssystems nach straßentypanzeigenden Merkmalen ausgewertet oder die erkannten Straßentypen plausibilisiert werden.

Schließlich ist es gemäß einer bevorzugten Weiterbildung der Erfindung besonders vorteilhaft, wenn aus den von dem Verkehrszeichenerkennungssystem erzeugten Verkehrszeicheninformationen als fahrspurverlaufsanzeigende Daten geschwindigkeitsbeschränkende und/oder den Straßentyp anzeigende Verkehrszeichen anzeigende Informationen erzeugt werden und mit diesen Informationen, welche geschwindigkeitsbeschränkende und/oder den Straßentyp bezeichnende Verkehrszeichen anzeigen, die Filterdynamik eines Filters des Spurerkennungssystems zur Generierung eines Spurverlaufsszenarios angepasst wird.

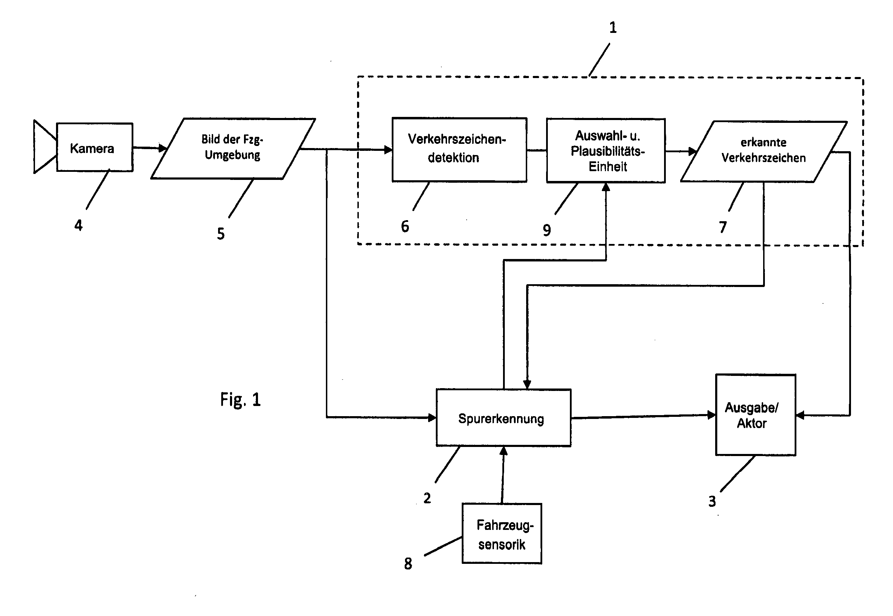

Die Erfindung wird nachfolgend unter Bezugnahme auf eine einzige Figur 1 näher erläutert. Diese Figur 1 zeigt ein schematisches Blockschaltbild eines aus einem Verkehrszeichenerkennungssystem 1 und einem Spurerkennungssystem 2 aufgebauten Fahrerassistenzsystems eines nicht dargestellten Kraftfahrzeugs.

Dieses Fahrerassistenzsystem umfasst ferner eine Videokamera 4 mit einer nachgeschalteten Speichereinheit 5, in welcher die von der Kamera 4 aufgenommenen Bilddaten der Umgebung des Kraftfahrzeugs als Bild gespeichert werden. Diese Kamera 4 erfasst den Raum vor dem Kraftfahrzeug und ist in der Regel am Innenspiegel des Kraftfahrzeugs angeordnet. Zusätzlich oder alternativ kann zur Erfassung des Seitenraums des Kraftfahrzeugs jeweils eine Kamera 4 am Außenspiegel montiert werden.

Die Bilddaten der Speichereinheit 5 werden sowohl dem Verkehrszeichenerkennungssystem 1 als auch dem Spurerkennungssystem 2 zugeführt.

Das Verkehrszeichenerkennungssystem 1 detektiert und klassifiziert mittels eines Detektors 6 gemäß im Stand der Technik bekannten Verfahren aus den Bilddaten Verkehrszeichen, die in einer nachfolgenden Auswahl- und Plausibilitäts-Einheit 9 plausibilisiert bzw. ausgewählt werden, bevor sie als erkannte Verkehrszeichen in einem Ausgabespeicher 7 abgelegt werden. Diese Information über erkannte Verkehrszeichen stehen dann einer Ausgabeeinheit 3 als HMI-Schnittstelle, bspw. einem Zentral-Display oder einer Anzeige eines Kombiinstruments zur Anzeige für den Fahrer des Kraftfahrzeugs zur Verfügung. Auch können hieraus Warnungen oder Fahrzeugeingriffe mittels einer Aktoreinheit 3 abgeleitet werden.

Aus den Bilddaten der Speichereinheit 5 wird mittels des Spurerkennungssystems 2 der Spurverlauf der aktuellen Fahrspur als auch von benachbarten Fahrspuren, wie Überholspur, Gegenspur oder Ausfahrtspur detektiert und zusammen mit den Daten einer Fahrzeugsensorik 8, die die Eigenbewegung des Fahrzeugs detektiert (Längsgeschwindigkeit, Quergeschwindigkeit, Giergeschwindigkeit usw.) ausgewertet und das Ergebnis der Ausgabe- und Aktoreinheit 3 zugeführt, um hieraus in gleicher Weise optische oder akustische Warnhinweise und/oder Fahrzeugeingriffe anzuleiten. Die Daten der Fahrzeugsensorik 8 werden auch anderen Fahrzeugsystemen, wie bspw. einem Fahrerassistenzsystem (ESP, ASR usw.) des Kraftfahrzeugs zugeführt.

Um das kamerabasierte Verkehrszeichen- und Spurerkennungssystem 1 und 2 robuster zu gestalten, werden sowohl die von dem Spurerkennungssystem 2 erzeugten Informationen, die für die Erkennung der Verkehrszeichen bedeutungsrelevant sind, dem Verkehrszeichenerkennungssystem 1 zugeführt als auch umgekehrt, werden die von dem Verkehrszeichenerkennungssystem 1 erzeugten Informationen, welche relevant für den Fahrspurverlauf sind, dem Spurerkennungssystem 2 zur Verfügung gestellt.

So können die von dem Verkehrszeichenerkennungssystem 1 erkannten Verkehrszeichen durch von dem Spurerkennungssystem 2 zur Verfügung gestellten Spurinformationen plausibilisiert werden, indem diese Spurinformationen der Auswahl- und Plausibilitäts-Einheit 9 zugeführt werden. Werden mehrere Verkehrszeichen erkannt, kann mittels der zugeführten Spurinformation das für die von dem Kraftfahrzeug aktuell befahrene Fahrspur geltende Verkehrszeichen ausgewählt werden. Auch ist es möglich, ein erkanntes Verkehrszeichen mittels der zugeführten Spurinformation zu plausibilisieren bzw. zu interpretieren, d. h. ob das erkannte Verkehrszeichen für die aktuell befahrene Fahrspur gilt, also vom Fahrer des Kraftfahrzeugs beachten werden muss.

Beispielhaft hierfür ist die Erkennung eines Überholverbotszeichens durch das Verkehrszeichenerkennungssystem 1 und dessen Plausibilisierung aufgrund der Detektion einer durchgezogenen oder als solche zu interpretierende Linienstruktur zwischen der aktuell befahrenen Spur und der benachbarten Überholspur.

Ferner können auch Tempolimits anzeigende Verkehrszeichen im Bereich von Ausfahrten, die nur für den Ausfahrtsbereich gültig sind, durch von dem Spurerkennungssystem 2 erkannten Ausfahrt und/oder erkannten Ausfahrtsspur plausibilisiert werden.

Falls in einem solchen Fall aus der mittels des Spurerkennungssystems 2 erkannten aktuellen Fahrspur und/oder aus einem mittels des Spurerkennungssystem 2 erkannten Fahrspurwechsel des Kraftfahrzeugs und den eine Ausfahrt anzeigenden Informationen des Spurerkennungssystems 2 eine Vorbeifahrt des Kraftfahrzeugs an der Ausfahrt detektiert wird, werden die Daten von dem Verkehrszeichenerkennungssystem 1 verworfen, welche erkannte und die Ausfahrt betreffende geschwindigkeitsbeschränkende und/oder überholverbotsanzeigende Verkehrszeichen betreffen. Also werden die Verkehrszeichendaten von der Auswahl- und Plausibilitäts-Einheit 9 nicht in den Ausgabespeicher 7 abgelegt.

Der eine Vorbeifahrt an einer Ausfahrt anzeigende Fahrspurwechsel wird durch Detektion eines Überfahrens einer Fahrbahnmarkierung mit dem Mitte des Fahrzeugs oder durch einen detektierten Richtungswechsel des Kraftfahrzeugs auf der Basis des Fahrzeug-Gierwinkels gegenüber der aktuellen Fahrspur bestimmt.

Ferner kann die Vorbeifahrt auch aufgrund des Wechsels des Markierungstyps der rechten Fahrbahnmarkierung erkannt werden, die zwischen durchgezogenen und gestrichelten Linien wechselt. Auch wäre die Detektion eines Blinkersignals hierfür geeignet.

Falls jedoch keine Vorbeifahrt an der Ausfahrt detektiert wird, sondern aus dem mittels des Spurerkennungssystems 2 erkannten aktuellen Fahrspur und/oder aus einem mittels des Spurerkennungssystems 2 erkannten Fahrspurwechsel des Kraftfahrzeugs und den eine Ausfahrt anzeigenden Informationen eine Abfahrt des Kraftfahrzeugs erkannt wird, werden die von dem Verkehrszeichenerkennungssystem 1 erkannten und von der Auswahl- und Plausibilitäts-Einheit 9 der Ausfahrt zugeordneten geschwindigkeitsbeschränkenden und/oder überholverbotsanzeigenden Verkehrszeichen über den Ausgabespeicher 7 an eine HMI-Schnittstelle 3 des Kraftfahrzeugs, bspw. als optischer oder akustischer Warnhinweis ausgegeben. Auch kann dies dazu verwendet werden, um Aktoren eines Fahrzeugassistenzsystems zur Einleitung eines Fahrzeugeingriffs anzusteuern, bspw. um ein Abbremsen des Kraftfahrzeugs einzuleiten.

Eine videobasierte Ausfahrtenerkennung erfolgt bspw. durch Erfassung des weiteren Umfeldes des Kraftfahrzeugs durch die Videokamera 4, um dadurch den Anfang und das Ende der Ausfahrtsspur zu detektieren. Zusätzlich können zur Plausibilisierung von dem Spurerkennungssystem 2 erkannte Ausfahrtsmarkierungen dienen. Als Merkmale oder Indikatoren zur Ausfahrtenerkennung wird die Nichtparallelität der Ausfahrtsspur zur aktuellen Fahrspur detektiert oder es werden die Markierungstypen erfasst und ausgewertet. Auf der Ebene der Bilderkennung ist die Erkennung einer Ausfahrt durch Detektion einer ypsilon- oder lambdaartigen Struktur möglich.

Weiterhin ist es im Zusammenhang mit der Erkennung einer Ausfahrt möglich, dass mit den eine Ausfahrt oder einen Ausfahrtsbereich anzeigende von dem Spurerkennungssystem 2 erzeugten Informationen von dem Verkehrszeichenerkennungssystem 1 erkannte geschwindigkeitsbeschränkende und/oder überholverbotsanzeigende Verkehrszeichen als aufgehoben interpretiert werden, d. h. dass diese Verkehrszeichendaten von der Auswahl- und Plausibilitäts-Einheit 9 nicht in dem Ausgabespeicher 7 abgelegt werden.

Schließlich ist es auch möglich, die von dem Spurerkennungssystem 2 hinsichtlich erkannter Ausfahrten erzeugten Informationen dazu zu verwenden, dass aus der Häufigkeit der erkannten Ausfahrten oder Ausfahrtsbereichen einen Rechtsverkehr oder einen Linksverkehr anzeigende, von dem Verkehrszeichenerkennungssystem 1 erkannte Verkehrszeichen zu plausibilisieren.

Weiterhin können auch mit von dem Spurerkennungssystem erzeugten, Baustellen anzeigenden Informationen Verkehrszeichen plausibilisiert werden, welche Tempolimits anzeigen. Auch ist es so möglich, auf eine Baustelle mit Geschwindigkeitsbegrenzung zu schließen, ohne dass ein Tempolimit anzeigendes Verkehrszeichen durch das Verkehrszeichenerkennungssystem 1 erkannt wurde. Dieser Fall kann bspw. auftreten, wenn solche Verkehrszeichen von vorausfahrenden Kraftfahrzeugen zeitweise verdeckt werden. Eine videobasierte Baustellenerkennung ist bspw. möglich durch Detektion von Leitplanken, Leitwänden oder erhabenen Strukturen sowie von Markierungsfarben.

Wie oben bereits angedeutet, enthalten auch die von dem Verkehrszeichenerkennungssystem 1 erzeugten Informationen über erkannte Verkehrszeichen relevante Informationen für den Fahrbahnverlauf, die dem Spurerkennungssystem 2 über den Ausgabespeicher 7 des Verkehrszeichenerkennungssystems 1 zur Verfügung gestellt werden.

So werden aus den von dem Verkehrszeichenerkennungssystem 1 erzeugten Verkehrszeicheninformationen als fahrspurverlaufsanzeigende Daten Baustellen anzeigende Informationen erzeugt, wodurch das Spurerkennungssystem 2 veranlasst wird, die Bilddaten der Speichereinheit 5 nach bestimmten Spurverlaufsszenarien und/oder Indikatoren für bestimmte Spurverlaufsszenarien auszuwerten.

Bestimmte Spurverlaufsszenarien und/oder Indikatoren für bestimmte Spurverlaufsszenarien stellen bspw. enger werdende Spurmarkierungen, zusätzliche Spurmarkierungen oder bestimmte Farben der Spurmarkierungen dar.

Diese Baustellen anzeigenden Informationen können bspw. Baustellenschilder oder einen Geschwindigkeitstrichter anzeigende Verkehrszeichen darstellen. Auch können solche Informationen des Verkehrszeichenerkennungssystems 1 zur Selektion der richtigen Spurbegrenzung im Bereich der Baustelle dienen, da die üblichen Spurmarkierungen von den Baustellenmarkierungen überlagert sein können.

Schließlich kann diese Baustellen anzeigende Information des Verkehrszeichenerkennungssystems 1 auch zum Ausschalten einer Spurfunktion eines Fahrerassistenzsystems des Kraftfahrzeugs verwendet werden, bspw. eine Spurverlassenswarnung oder eine Spurhaltefunktion.

Weiterhin werden aus den von dem Verkehrszeichenerkennungssystem 1 erzeugten Verkehrszeicheninformationen als fahrspurverlaufsanzeigende Daten geschwindigkeitsbeschränkende und/oder den Straßentyp bezeichnende Verkehrszeichen anzeigende Informationen erzeugt, die mittels des Spurerkennungssystems 2 nach straßentypanzeigenden Merkmalen ausgewertet oder erkannte Straßentypen plausibilisiert werden. So kann bspw. bei einem erkannten Tempolimit von 130 km/h eine von dem Spurerkennungssystem 2 erkannte Landstraße plausibilisiert werden. Entsprechend kann bei von dem Verkehrszeichenerkennungssystem 1 erkannten Schnellstraßen- oder Autobahnzeichen von dem Spurerkennungssystem 2 eine erkannte Schnellstraße oder eine erkannte Autobahn plausibilisiert werden.

Werden aus den von dem Verkehrszeichenerkennungssystem 1 erzeugten Verkehrszeicheninformationen als fahrspurverlaufsanzeigende Daten geschwindigkeitsbeschränkende und/oder den Straßentyp anzeigende Verkehrszeichen anzeigende Informationen erzeugt, wird auf Basis dieser Informationen die Filterdynamik eines Filters des Spurerkennungssystems 2 zur Generierung eines Spurverlaufsszenarios angepasst.

## Patentansprüche

1. Verfahren zur Fusion eines Verkehrszeichenerkennungssystems (1) und eines Spurerkennungssystems (2) eines Kraftfahrzeugs, wobei aus Sensordaten einer kamera- oder videobasierten Sensorik (4) das Verkehrszeichenerkennungssystem (1) Verkehrszeicheninformationen und das Spurerkennungssystem (2) Fahrspurverlaufsinformationen erzeugt, **dadurch gekennzeichnet, dass**
- aus den Fahrspurverlaufsinformationen des Spurerkennungssystems (2) bedeutungsanzeigende Daten für Verkehrszeichen erzeugt werden,
- die für Verkehrszeichen bedeutungsanzeigenden Daten zur Plausibilisierung und/oder Interpretation der Verkehrszeicheninformationen verwendet werden,
- aus den Verkehrszeicheninformationen des Verkehrszeichenerkennungssystems (1) fahrspurverlaufsanzeigende Daten erzeugt werden, und
- die fahrspurverlaufsanzeigenden Daten zur Plausibilisierung und/oder Interpretation der Fahrspurverlaufsinformationen verwendet werden.

2. Verfahren nach Anspruch 1,
**dadurch gekennzeichnet, dass**
ein mittels des Verkehrszeichenerkennungssystems (1) erkanntes Verkehrszeichen mit fahrspurverlaufsanzeigenden Daten des Spurerkennungssystems (2) plausibilisiert wird.

3. Verfahren nach Anspruch 1 oder 2,
**dadurch gekennzeichnet, dass**
- aus den Fahrspurverlaufsinformationen des Spurerkennungssystems (2) als für Verkehrszeichen bedeutungsanzeigende Daten Informationen über eine Linienstruktur zu einer Überholspur einer Fahrbahn erzeugt werden, und
- von dem Verkehrszeichenerkennungssystem (1) erkannte überholverbotsanzeigende Verkehrszeichen mit den Informationen über die Linienstruktur plausibilisiert werden.

4. Verfahren nach einem der vorhergehenden Ansprüche,
**dadurch gekennzeichnet, dass**
- aus den Fahrspurverlaufsinformationen des Spurerkennungssystems (2) als für Verkehrszeichen bedeutungsanzeigende Daten eine Ausfahrt oder einen Ausfahrtsbereich anzeigende Informationen erzeugt werden, und
- von dem Verkehrszeichenerkennungssystem (1) erkannte geschwindigkeitsbeschränkende und/oder überholverbotsanzeigende Verkehrszeichen mit den eine Ausfahrt oder einen Ausfahrtsbereich anzeigenden Informationen plausibilisiert werden.

5. Verfahren nach Anspruch 4,
**dadurch gekennzeichnet, dass**
- aus der mittels des Spurerkennungssystems (2) erkannten aktuellen Fahrspur und/oder aus einem mittels des Spurerkennungssystems erkannten Fahrspurwechsel des Kraftfahrzeugs und den eine Ausfahrt anzeigenden Informationen eine Vorbeifahrt des Kraftfahrzeugs an der Ausfahrt detektiert wird, und
- die Daten von dem Verkehrszeichenerkennungssystem (1) verworfen werden, welche erkannte und die Ausfahrt betreffende geschwindigkeitsbeschränkende und/oder überholverbotsanzeigende Verkehrszeichen betreffen.

6. Verfahren nach Anspruch 4,
**dadurch gekennzeichnet, dass**
- aus der mittels des Spurerkennungssystems (2) erkannten aktuellen Fahrspur und/oder aus einem mittels des Spurerkennungssystems (2) erkannten Fahrspurwechsel des Kraftfahrzeugs und den eine Ausfahrt anzeigenden Informationen eine Abfahrt des Kraftfahrzeugs detektiert wird, und
- von dem Verkehrszeichenerkennungssystem (1) erkannte und der Ausfahrt zugeordnete geschwindigkeitsbeschränkende und/oder überholverbotsanzeigende Verkehrszeichen an eine HMI-Schnittstelle (3) des Kraftfahrzeugs ausgegeben werden.

7. Verfahren nach einem der vorhergehenden Ansprüche,
**dadurch gekennzeichnet, dass**
- aus den die aktuelle Fahrspur des Kraftfahrzeugs betreffenden Fahrspurverlaufsinformationen des Spurerkennungssystems (2) als für Verkehrszeichen bedeutungsanzeigende Daten eine Ausfahrt oder einen Ausfahrtsbereich anzeigende Informationen erzeugt werden, und
- mit den eine Ausfahrt oder einen Ausfahrtsbereich anzeigenden Informationen von dem Verkehrszeichenerkennungssystem (1) erkannte geschwindigkeitsbeschränkende und/oder überholverbotsanzeigende Verkehrszeichen als aufgehoben interpretiert werden.

8. Verfahren nach einem der vorhergehenden Ansprüche,
**dadurch gekennzeichnet, dass**
- aus den die aktuelle Fahrspur betreffenden Fahrspurverlaufsinformationen des Spurerkennungssystems (2) als für Verkehrszeichen bedeutungsanzeigende Daten eine Ausfahrt oder einen Ausfahrtsbereich anzeigende Informationen erzeugt werden, und
- aus der Häufigkeit der erkannten Ausfahrten oder Ausfahrtsbereichen einen Rechtsverkehr oder einen Linksverkehr anzeigende, von dem Verkehrszeichenerkennungssystem (1) erkannte Verkehrszeichen plausibilisiert werden.

9. Verfahren nach einem der vorhergehenden Ansprüche,
**dadurch gekennzeichnet, dass**
- aus den die aktuelle Fahrspur betreffenden Fahrspurverlaufsinformationen des Spurerkennungssystems (2) als für Verkehrszeichen bedeutungsanzeigende Daten Baustellen anzeigende Informationen erzeugt werden, und
- mit den eine Baustelle anzeigenden Informationen von dem Verkehrszeichenerkennungssystem (1) erkannte geschwindigkeitsbeschränkende und/oder,überholverbotsanzeigende Verkehrszeichen plausibilisiert werden.

10. Verfahren nach einem der vorhergehenden Ansprüche;
**dadurch gekennzeichnet, dass**
- aus den von dem Verkehrszeichenerkennungssystem (1) erzeugten Verkehrszeicheninformationen als fahrspurverlaufsanzeigende Daten Baustellen anzeigende Informationen erzeugt werden, und
- aus den Baustellen anzeigende Informationen mittels des Spurerkennungssystems (2) die Sensordaten nach bestimmten Spurverlaufsszenarien und/oder Indikatoren für bestimmte Spurverlaufsszenarien ausgewertet werden.

11. Verfahren nach einem der vorhergehenden Ansprüche,
**dadurch gekennzeichnet, dass**
- aus den von dem Verkehrszeichenerkennungssystem (1) erzeugten Verkehrszeicheninformationen als fahrspurverlaufsanzeigende Daten geschwindigkeitsbeschränkende und/oder den Straßentyp bezeichnende Verkehrszeichen anzeigende Informationen erzeugt werden, und
- die Informationen, welche geschwindigkeitsbeschränkende und/oder den Straßentyp bezeichnende Verkehrszeichen anzeigen, werden mittels des Spurerkennungssystems (2) nach straßentypanzeigenden Merkmalen ausgewertet oder die erkannten Straßentypen plausibilisiert.

12. Verfahren nach einem der vorhergehenden Ansprüche,
**dadurch gekennzeichnet, dass**
- aus den von dem Verkehrszeichenerkennungssystem (1) erzeugten Verkehrszeicheninformationen als fahrspurverlaufsanzeigende Daten geschwindigkeitsbeschränkende und/oder den Straßentyp bezeichnende Verkehrszeichen anzeigende Informationen erzeugt werden, und
- mit den Informationen, welche geschwindigkeitsbeschränkende und/oder den Straßentyp bezeichnende Verkehrszeichen anzeigen, wird die Filterdynamik eines Filters des Spurerkennungssystems (2) zur Generierung eines Spurverlaufsszenarios angepasst.

## Claims

1. A method for merging a traffic sign recognition system (1) and a lane recognition system (2) of a motor vehicle wherein the traffic sign recognition system (1) generates traffic sign information and the lane recognition system (2) generates driving lane information from sensor data of a camera- or video-based sensing device,
**characterized in that**
- data indicating the meaning of traffic signs are generated from the driving lane information of the lane recognition system (2),
- the data indicating the meaning of traffic signs are used for plausibility checking and/or interpreting the traffic sign information,
- data indicating the course of the lane are generated from traffic sign information of the traffic sign recognition system (1), and
- the data indicating the course of the lane are used for plausibility checking and/or interpreting the driving lane information.

2. The method according to claim 1,
**characterized in that**
a traffic sign recognized using the traffic sign recognition system (1) is checked for plausibility using data indicating the course of the lane from the lane recognition system (2).

3. The method according to claim 1 or 2,
**characterized in that**
- information about the line structure of a passing lane of a road is generated from the driving lane information of the lane recognition system (2) as data indicating the meaning of traffic signs, and
- "no passing" signs recognized by the traffic sign recognition system (1) are checked for plausibility using the line structure information.

4. The method according to any one of the preceding claims, **characterized in that**
- information indicating an exit or exit area is generated from the driving lane information of the lane recognition system (2) as data indicating the meaning of traffic signs, and
- speed limit and/or "no passing" signs recognized by the traffic sign recognitions system (1) are checked for plausibility using the information indicating an exit or exit area.

5. The method according to claim 4,
**characterized in that**
- passage of the vehicle past an exit is detected from the current driving lane recognized using the lane recognition system (2) and/or from a lane change by the vehicle recognized by the lane recognition system and
information indicating an exit, and
- the traffic sign recognition system (1) discards the data referring to previously recognized speed limit and/or "no passing" signs relating to the exit.

6. The method according to claim 4,
**characterized in that**
- the vehicle leaving the road it was on at an exit is detected from the current driving lane recognized using the lane recognition system (2) and/or from a lane change by the vehicle recognized by the lane recognition system (2) and information indicating an exit, and
- the traffic sign recognition system (1) outputs data about recognized speed limit and/or "no passing" signs relating to the exit to a HMI interface of the vehicle.

7. The method according to any one of the preceding claims, **characterized in that**
- information indicating an exit or exit area is generated from the current driving lane information relating to the current driving lane of the motor vehicle received from the lane recognition system (2) as data indicating the meaning of traffic signs, and
- speed limit and/or "no passing" signs recognized by the traffic sign recognition system (1) are interpreted as canceled using the information indicating an exit or exit area.

8. The method according to any one of the preceding claims, **characterized in that**
- information indicating an exit or exit area is generated from the current driving lane information relating to the current driving lane received from the lane recognition system (2) as data indicating the meaning of traffic signs, and
- traffic signs indicating right-hand or left-hand traffic that are recognized by the traffic sign recognition system (1) are checked for plausibility based on the frequency of recognized exits or exit signs

9. The method according to any one of the preceding claims, **characterized in that**
- information indicating construction sites is generated from the driving lane information relating to the current driving lane received from the lane recognition system (2) as data indicating the meaning of traffic signs, and
- speed limit and/or "no passing" signs recognized by the traffic sign recognition system (1) are checked for plausibility using the information indicating a construction site.

10. The method according to any one of the preceding claims, **characterized in that**
- information indicating construction sites is generated from traffic sign information generated as data indicating the course of the lane by the traffic sign recognition system (1), and
- the lane recognition system (2) evaluates the sensor data based on specific lane course scenarios and/or indicators for specific lane course scenarios derived from data indicating construction sites.

11. The method according to any one of the preceding claims, **characterized in that**
- information indicating speed limit signs and/or traffic signs indicating the type of road is generated from traffic sign information generated as data indicating the course of the lane by the traffic sign recognition system (1), and
- the lane recognition system (2) evaluates the information indicating speed limit signs and/or traffic signs indicating the type of road based on features indicating the type of road or checks the road types recognized for plausibility.

12. The method according to any one of the preceding claims, **characterized in that**
- information indicating speed limit signs and/or traffic signs indicating the type of road is generated from traffic sign information generated as data indicating the course of the lane by the traffic sign recognition system (1), and
- the information indicating speed limit signs and/or traffic signs indicating the type of road is used to adjust the filter dynamics of a filter of the lane recognition system (2) for generating a lane course scenario.

## Revendications

1. Procédé de fusion d'un système de reconnaissance de panneaux de signalisation (1) et d'un système de reconnaissance de voies (2) d'un véhicule automobile, le système de reconnaissance de panneaux de signalisation (1) produisant des informations de panneaux de signalisation et le système de reconnaissance de voies (2) produisant des informations de voies de circulation à partir de données de capteurs d'un équipement de capteurs (4) à base de caméra ou de vidéo, **caractérisé en ce que**
- à partir des informations de tracé de voies de circulation du système de reconnaissance de voies (2), des données indiquant des significations sont produites pour des panneaux de signalisation,
- les données indiquant des significations pour des panneaux de signalisation sont utilisées pour l'analyse de plausibilité et/ou pour l'interprétation des informations de panneaux de signalisation,
- des données indiquant le tracé de voies de circulation sont produites à partir des informations de panneaux de signalisation du système de reconnaissance de panneaux de signalisation (1), et
- les données indiquant le tracé de voies de circulation sont utilisées pour l'analyse de plausibilité et/ou l'interprétation des informations sur le tracé de voies de circulation.

2. Procédé selon la revendication 1,
**caractérisé en ce**
**qu'**un panneau de signalisation reconnu au moyen du système de reconnaissance de panneaux de signalisation (1) fait l'objet d'une analyse de plausibilité avec des données indiquant le tracé de voies de circulation du système de reconnaissance de voies (2).

3. Procédé selon la revendication 1 ou 2,
**caractérisé en ce que**
- à partir des informations sur le tracé de voies de circulation du système de reconnaissance de voies (2) en tant que données indiquant des significations pour des panneaux de signalisation, des informations sur la structure de ligne concernant une voie de dépassement d'un voie de circulation sont produites, et
- des panneaux de signalisation reconnus par le système de reconnaissance de panneaux de signalisation (1) et indiquant une interdiction de dépasser font l'objet d'une analyse de plausibilité avec les informations structure de ligne.

4. Procédé selon une des revendications précédentes,
**caractérisé en ce que**
- à partir des informations sur le tracé de voies de circulation du système de reconnaissance de voies (2) en tant que données indiquant des significations pour les panneaux de signalisation, des informations indiquant une sortie ou une zone de sortie sont produites, et
- des panneaux de signalisation reconnus par le système de reconnaissance de panneaux de signalisation (1) et limitant la vitesse et/ou interdisant les dépassements font l'objet d'une analyse de plausibilité avec les informations indiquant une sortie ou une zone de sortie.

5. Procédé selon la revendication 4,
**caractérisé en ce que**
- à partir de la voie de circulation actuelle reconnue au moyen du système de reconnaissance de voies (2) et/ou à partir d'un changement de voie de circulation du véhicule automobile reconnu au moyen du système de reconnaissance de voie et à partir des informations indiquant une sortie, un passage du véhicule automobile devant la sortie est détectée, et
- **en ce que** sont rejetées par le système de reconnaissance de panneaux de signalisation (1) les données qui concernent des panneaux de signalisation reconnus limitant la vitesse et/ou indiquant une interdiction de dépasser et qui concernent la sortie.

6. Procédé selon la revendication 4,
**caractérisé en ce que**
- à partir de la voie de circulation actuelle reconnue au moyen du système de reconnaissance de voies (2) et/ou à partir d'un changement de voie de circulation du véhicule automobile reconnu au moyen du système de reconnaissance de voies (2) et à partir des informations indiquant une sortie, une sortie du véhicule automobile est détectée, et
- des panneaux de signalisation reconnus par le système de reconnaissance de panneaux de signalisation (1) et limitant la vitesse et/ou indiquant une interdiction de dépasser et affectés à la sortie sont fournis à une interface HMI (3) du véhicule automobile.

7. Procédé selon une des revendications précédentes,
**caractérisé en ce que**
- à partir des informations sur le tracé de voies de circulation du système de reconnaissance de voies (2) concernant la voie de circulation actuelle du véhicule automobile en tant que données indiquant des significations pour des panneaux de signalisation, des informations indiquant une sortie ou une zone de sortie sont produites, et
- avec les informations indiquant une sortie ou une zone de sortie, des panneaux de signalisation reconnus par système de reconnaissance de panneaux de signalisation (1) et limitant la vitesse et/ou indiquant une interdiction de dépasser sont interprétés comme annulés.

8. Procédé selon une des revendications précédentes,
**caractérisé en ce que**
- à partir des informations sur le tracé de voies de circulation du système de reconnaissance de voies (2) concernant la voie de circulation actuelle en tant que données indiquant des significations pour des panneaux de signalisation, des informations indiquant une sortie ou une zone de sortie sont produites, et
- à partir de la fréquence des sorties ou zones de sortie reconnue, des panneaux de signalisation reconnus par le système de reconnaissance de panneaux de signalisation (1) et indiquant une conduite à droite ou une conduite à gauche font l'objet d'une analyse de plausibilité.

9. Procédé selon une des revendications précédentes,
**caractérisé en ce que**,
- à partir des informations sur le tracé voies de circulation du système de reconnaissance de voies (2) concernant la voie de circulation actuelle en tant que données indiquant des significations pour des panneaux de signalisation, des information indiquant des chantiers sont produites, et
- avec les informations indiquant un chantier, des panneaux de signalisation reconnus par le système de reconnaissance de panneaux de signalisation (1) et qui limitent la vitesse et/ou qui indiquent une interdiction de dépasser font l'objet d'une analyse de plausibilité.

10. Procédé selon une des revendications précédentes,
**caractérisé en ce que**
- à partir des informations de panneaux de signalisation produites par le système de reconnaissance de panneaux de signalisation (1) en tant que données indiquant un tracé de voies de circulation, des informations indiquant des chantiers sont produites, et
- à partir des informations indiquant des chantiers au moyen du système de reconnaissance de voies (2), les données de capteurs sont analysées selon certains scénarios de tracé de voies et/ou des indicateurs pour certains scénarios de tracé de voies.

11. Procédé selon une des revendications précédentes,
**caractérisé en ce que**
- à partir des informations de panneaux de signalisation produites par le système de reconnaissance de panneaux de signalisation (1) en tant que données indiquant un tracé de voies de circulation, des informations indiquant des panneaux de signalisation limitant la vitesse et/ou désignant le type de route sont produites, et
- les informations qui indiquent des panneaux de signalisation limitant la vitesse et/ou désignant le type de route sont analysées au moyen du système de reconnaissance de voies (2) selon des caractéristiques indiquant le type de route, ou les types de route reconnus font l'objet d'une analyse de plausibilité.

12. Procédé selon une des revendications précédentes,
**caractérisé en ce que**
- à partir des informations de panneaux de signalisation produites par le système de reconnaissance de panneaux de signalisation (1) en tant que données indiquant un tracé de voies de circulation, des informations indiquant des panneaux de signalisation limitant la vitesse et/ou désignant le type de route sont produites, et
- avec les informations qui indiquent des panneaux de signalisation limitant la vitesse et/ou désignant le type de route, la dynamique de filtrage d'un filtre du système de reconnaissance de voies (2) est adaptée pour générer un scénario de tracé de voies.
